# EUROPEAN PATENT SPECIFICATION

(11) **EP 3 824 005 B1**
(45) Date of publication and mention of the grant of the patent: **22.02.2023**
(21) Application number: 19742518.4
(22) Date of filing: 03.07.2019
(51) Int. Cl.: C08F 230/08, C09D 143/04, C09J 143/04

(54) **LIQUID WOUND DRESSING COMPOSITION**
FLÜSSIGE WUNDAUFLAGENZUSAMMENSETZUNG
COMPOSITION DE PANSEMENT POUR PLAIE LIQUIDE

(30) Priority: 17.07.2018 CZ 201835185 U; 17.07.2018 CZ 20180359
(43) Date of publication of application: 26.05.2021
(73) Proprietor: Ustav Makromolekularni Chemie AV CR, V. V. I., 16200 Praha 6 (CZ)
(72) Inventor: SEDLAKOVA, Zdenka, 25262 Horomerice (CZ); POLAKOVA, Lenka, 16200 Praha 6 (CZ); POREBA, Rafal, 16500 Praha 6 (CZ)
(74) Representative: Hartvichova, Katerina
(86) International application number: PCT/CZ2019/050030
(87) International publication number: WO 2020/015768

(56) References cited:
- WO-A1-92/14428
- US-B1- 6 610 284
- L. POLAKOVA ET AL: "Antioxidant Properties of 2-Hydroxyethyl Methacrylate-Based Copolymers with Incorporated Sterically Hindered Amine", BIOMACROMOLECULES, vol. 16, no. 9, 14 September 2015 (2015-09-14), pages 2726-2734, XP055252383, US ISSN: 1525-7797, DOI: 10.1021/acs.biomac.5b00599

## Description

### Technical field

The present invention is directed to a liquid composition based on polymer network comprising siloxane groups and a covalently bound antioxidant component. Upon application to the skin or mucosa, the preparation forms an adhesive and transparent covering and protective layer that exhibits anti-inflammatory effects, thereby contributing positively to the prevention of inflammation and to skin and mucosa wound healing.

### Background Art

A wound is defined as a damage to body cover integrity. The appearance of an acute wound implies the action of an external agent that leads to skin and soft tissue damage. Usually, they do not require professional medical treatment, and the injured persons treat them themselves. Appropriate treatment affects the length of the healing process and possibly the aesthetic appearance of the scar. Acute injury usually heals within six weeks, which is the standard time for physiological healing of an acute wound.

Wound healing is a complex physiological process characterized by three distinct, mutually overlapping phases (inflammation, proliferation and epithelialization).

During the first phase of healing, the immune system cells (neutrophils, macrophages) produce pro-inflammatory mediators (cytokines) that promote the inflammatory process and cause, inter alia, the formation of reactive oxygen species (ROS) with bactericidal activity and release them into the extracellular fluid, exudate. Main types of ROS include hydrogen peroxide (H₂O₂) and oxygen radicals - hydroxyl (•OH), peroxyl (-OOR), hydroperoxyl (•OOH), superoxide anion radicals (•OO⁻). An important factor affecting the course of healing is the balance between the concentration of ROS at the site of injury and the antioxidant capacity of the surrounding cells. If this equilibrium is violated due to overproduction of ROS, so-called oxidative stress occurs, which in turn leads to a further tissue damage, which, among other things, results in a significant increase in treatment time. Antioxidants effectively suppress the development of oxidative stress by their ability to react with ROS and by converting them into substances harmless to the body, thereby contributing significantly to the creation of an optimal wound environment that promotes the healing process.

During the second (proliferative) phase, cells of the newly formed tissue, called granulation tissue, migrate, proliferate, and divide at the site of injury. The granulation tissue is characterized by a very disorganized structure and is composed mainly of fibroblasts and new vessels.

The epithelialization phase follows the proliferative phase. In the epithelialization phase the already formed granulation tissue contracts. The cell lining of the new tissue usually starts from the edges of the wound or from the so-called epithelial islands. The wound gradually contracts during this phase, its surface being covered by the epithelium from healthy tissue around the wound. Contracted tissue is formed, a scar that is gradually remodeled into a tissue structure with a high degree of organization.

The optimal wound dressing should by its properties correspond as effectively as possible to the individual phases of wound healing. In addition to biocompatibility and to chemical, mechanical and thermal stability, the dressing should also be capable of actively suppressing oxidative stress at the site of injury, be impermeable to bacteria and external contaminants, and permeable to water vapor and oxygen, promote cell adhesion and growth, and epithelialization of wound surface. Advantageous is also transparency of the cover for visual inspection of the wound condition.

A suitable type of acute wound dressing is then a coating solution or suspension of a polymer, which, after application and subsequent rapid evaporation of the solvent, forms a barrier film on the skin, which is breathable and protective. This type of dressing is preferred by patients, since the risk of wound contamination upon its application is significantly reduced, and it is easy to apply to wounds even in areas whose treatment with conventional coverings is usually difficult (e.g. between fingers, on joints).

Liquid wound dressing compositions are known which are based on a polymer solution which is prepared exclusively by radical polymerization method and which contains siloxane groups in its structure. US 6383502 B1 discloses wound dressing in the form of a solution of a siloxane groups-containing polymer in a low molecular weight polydimethylsiloxane. The polymer contains monomeric units of exclusively hydrophobic character, which is reflected in the material properties of the dressing, such as water impermeability, water repellency. The dressing prepared according to this patent may also include additional wound healing agents which are always added only in the form of low molecular weight substances. This results in the obvious disadvantage of the above-mentioned dressing, since the biologically active low molecular components are absorbed by the skin into the body after application of the preparation, thereby reducing their local concentration at the site of injury and causing undesirable side effects.

A polymeric network wound dressing comprising siloxane groups in its structure, and its solution in a volatile polydimethylsiloxane and/or a liquid alkane is the subject of US 8263720 B 1. The polymer networks forming the basis of the preparation according to US 8263720 B 1 are exclusively prepared by radical copolymerization of alkylsiloxanes bearing a polymerizable double bond with multifunctional monomers (crosslinkers) containing at least two polymerizable double bonds. Upon application to the skin and evaporation of the solvent, the polymer solution forms a weakly adhesive polymeric film which serves to protect the wound or the skin from damage by strongly adhesive medical devices such as patches or adhesive tapes around ostomy tubes. However, the poor adhesion of the polymeric film to the skin may be an obvious disadvantage when using such a dressing as a wound healing dressing, since it does not provide adequate protection of the wound from contamination from the outside or by mechanical damage to the dressing. The composition of the dressing prepared according to US 8263720 B1 may also include the addition of low molecular weight healing agents; however, this represents a further disadvantage of dressing, for the reasons given above

WO92Z14428 discloses a liquid polymer-containing coating material which comprises from 1 to 40 wt. % siloxane-containing polymer and 59.9 to 98.9 wt. % volatile polydimethylsiloxane and which can act as a bandage or dressing to protect wounds, when applied in liquid form and air dried on the wound to form an adherent, solid protective film without significant stinging to the skin or mucous membranes of the user. The copolymer comprises 3-methacryloyloxypropyl tris(trimethylsiloxy)silane and (meth)acrylate monomers.

US6610284 discloses a preparation for prevention and healing of inflammation affections which comprises 0.1-99.9 wt.% sterically hindered amine derivatives. L. POLAKOVA ET AL: "Antioxidant Properties of 2-Hydroxyethyl Methacrylate-Based Copolymers with Incorporated Sterically Hindered Amine",BIOMACROMOLECULES, vol. 16, no. 9, 14 September 2015 (2015-09-14), pages 2726-2734, discloses copolymers comprising N-(2,2,6,6-tetramethyl-piperidin-4-yl) methacrylamide repeating units showing antioxidants properties and their use as hydrogel wound dressing materials.

### Disclosure of the Invention

The present invention overcomes the aforementioned drawbacks of the prior art by providing a liquid wound dressing composition based on a polymeric network prepared by combining radical polymerization of monomers containing a polymerizable double bond, including derivatives of sterically hindered amines, alkyloxysilanes and alkylsiloxanes, optionally additional monomers, and hydrolysis/condensation reactions of said alkyloxysilanes. By radical polymerization, polymer chains are formed which are simultaneously crosslinked by the silane condensation reaction products. The result is a polymer network that adheres well to the skin and mucosa and which contains both siloxane groups and covalently bound anti-inflammatory components (sterically hindered amines) in its structure.

It is an object of the present invention to provide a liquid wound dressing composition comprising a polymer network which is dissolved or suspended in a volatile solvent based on polydimethylsiloxane. The product does not irritate the skin or mucosa after application, it is non-stinging, and after evaporation of the solvent it creates a protective layer which is highly adherent and has an anti-inflammatory effect, thus contributing positively to the prevention and healing of acute wounds on the skin or mucosa. The solvent in which the polymer is dissolved or dispersed meets a number of requirements, including in particular a relatively high vapor pressure (to rapidly evaporate after application to the skin) and biocompatibility. The solvent also is non-stinging when in contact with an open wound. Liquid volatile polydimethylsiloxanes are solvents meeting all these requirements. After application to the injured skin, they cover the exposed nerve endings, thereby immediately relieving the pain and not causing a burning sensation. The solvent may also be called "liquid component".

The polydimethylsiloxanes suitable for use in the present invention preferably have 2 to 10, more preferably 2 to 5 dimethylsiloxane units, and may be linear, branched (containing methyl groups at the chain ends) or cyclic. The polydimethylsiloxanes are preferably selected from the group consisting of octamethylcyclotetrasiloxane, decamethylcyclopentasiloxane, octamethyltrisiloxane, hexamethyldisiloxane (HMDS).

The polydimethylsiloxanes can also be used in the present invention in combination with other solvents such as esters, linear or cyclic ethers, primary or secondary alcohols, ketones, wherein the content of polydimethylsiloxanes in such mixed polydimethylsiloxane-based solvent is at least 50 wt. %.

The polymer network which forms the basis of the formulation of the present invention comprises three structural unit types of A, B, C, and optionally a structural unit type D, each structural unit having different functions in the polymer structure and in the functioning of the formulation. The polymer network comprises one or more different units of each type.

Structural units A contain chemical groups that are capable of binding or inactivating substances toxic or adversely affecting inflammatory processes and which catalyze hydrolytic reactions of alkyloxysilanes. The structural units A are derived from derivatives of sterically hindered amines of the formula (a): 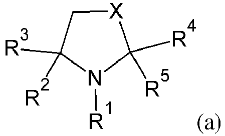
wherein R¹ is -H, -OH, or C₁-C₄ alkyl,
R² to R⁵ are independently selected from C₁ to C₄ alkyl, and
X is -CH(X¹)- or -CH(X¹)CH₂-, wherein X¹ is a free-radical polymerizable chemical group 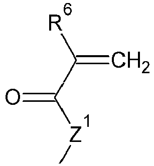
wherein R⁶ is -H or -CH₃ and Z¹ is -O- or -NH-.

The content of structural units A in the polymer network is preferably in the range of 0.01 to 20 wt. %, relative to the total weight of the polymer network.

The structural units A are preferably derived from 2,2,6,6-tetramethylazinan-4-yl-methacrylate and/or N-(2,2,6,6-tetramethylazinan-4-yl)methacrylamide. Azinane is another possible name for piperidine, which is the preferred IUPAC name.

The structural units B contain chemical groups which undergo hydrolysis and subsequent condensation reactions leading to crosslinking of the polymer, thereby promoting its non-absorbability into the body. The structural units B are derived from alkyloxysilanes of the general formula (b): 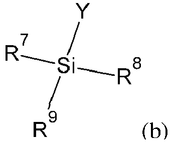 wherein R⁷ is -O(X²), wherein X² is C₁ to C₄ alkyl,
R⁸ and R⁹ are independently selected from C₁ to C₄ alkyl or -O(X³), wherein X³ is C₁ to C₄ alkyl, and
Y is a free-radical polymerizable chemical group 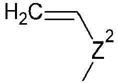 wherein Z² is -(CH₂)ₘ-, wherein m = 0 to 6;
or 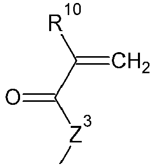 wherein R¹⁰ is -H or -CH₃ and Z³ is -(CH₂)ₙ-, wherein n = 1 to 6.

The content of the structural units B in the polymer network is preferably 0.1 to 15 wt.%, relative to the total weight of the polymer network.

The structural units B are preferably derived from 3-(triethoxysilyl) propyl methacrylate, 3-(dimethoxymethylsilyl) propyl methacrylate, (triethoxysilyl)ethylene and/or (trimethoxysilyl)ethylene. The structural units C contain alkylsiloxane groups which improve the ability of the polymer network to form films, promote its adhesion to the skin and mucosa, and ensure the solubility or swellability of the polymeric network in a volatile solvent which is non-irritating and non-stinging upon application to injured skin. The structural units C are derived from alkylsiloxanes of the formula (c): 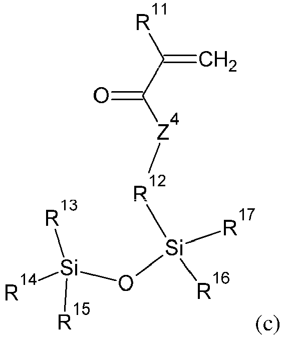 wherein R¹¹ is -H or -CH₃,
Z⁴ is -O- or -NH-,
R¹² is - (CH₂)ₒ -, wherein o = 1 to 6,
R¹³ to R¹⁵ are independently selected from C₁ to C₄ alkyl or -OSi(X⁴)₃, wherein X⁴ is C₁ to C₄ alkyl, wherein X⁴ are the same or different,
R¹⁶ and R¹⁷ are independently selected from C₁ to C₄ alkyl or -OSi(X⁵)₃, and X⁵ is C₁ to C₄ alkyl or - OSi(X⁶)₃ wherein X⁶ is C₁ to C₄ alkyl, wherein X⁵ is the same or different.

The content of structural units C in the polymer network is preferably 30 to 80 wt. %, relative to the total weight of the polymer network.

The structural units C are preferably derived from 3-[tris(trimethylsiloxy)silyl]propyl methacrylate and/or 3-[tris(trimethylsiloxy)silyl]propyl acrylate.

Further structural units D may optionally be bonded to the polymer network structure to affect its adhesion, cohesion, elasticity, flexibility, transparency, oxygen and water vapor permeability, or combinations thereof. Suitable structural units are structural units derived from (meth)acrylamide monomers, alkyl (meth)acrylates, alkyl (meth)acrylamides, alkyloxy terminated (polyoxyethylene) (meth)acrylates, alkyloxy terminated (polyoxyethylene) (meth)acrylamides, *N,N*-dialkylaminoalkyl (meth)acrylates, *N,N*-dialkylaminoalkyl (meth)acrylamides, *N*-vinyl-2-pyrrolidone; wherein the alkyls in these substituents are C₁-C₁₄ alkyls, preferably C₁-C₁₂ alkyls or Ci-Cs alkyls. Examples of such monomers are methyl methacrylate, methyl acrylate, ethyl methacrylate, ethyl acrylate, isopropyl methacrylate, isopropyl acrylate, n-butyl methacrylate, n-butyl acrylate, isobutyl methacrylate, isobutyl acrylate, n-hexyl methacrylate, n-hexyl acrylate, cyclohexyl methacrylate, cyclohexyl acrylate, 2-methyl-1-butyl methacrylate, 2-methyl-1-butyl acrylate, 2-ethylhexyl methacrylate, 2-ethylhexyl acrylate, lauryl methacrylate, lauryl acrylate, isooctyl methacrylate, isooctyl acrylate, and combinations thereof.

The content of structural units D in the polymer network is up to 50 wt. %, preferably in the range of 5 to 35 wt. %, relative to the total weight of the polymer network.

Structural units derived from the monomers of the general formulas are structural units formed by the polymerization of these monomers, i.e. by their incorporation into the polymer chain by formation of bonds to neighbouring structural units.

The polymer network of the present invention is obtainable by free-radical copolymerization of monomeric precursors of structural units A, B, and C (i.e., of the monomers of formulas (a), (b) and (c)), optionally with monomeric precursors of structural units D; and simultaneous or subsequent condensation reaction (hydrolytic condensation) of structural units B within the polymer.

The present invention further provides a process for the preparation of the pharmaceutical composition, comprising the steps of free-radical copolymerization of monomeric precursors (a), (b) and (c) of structural units A, B and C, and optionally D, and a condensation reaction (hydrolytic condensation) simultaneous with the free-radical copolymerization or subsequent to the free-radical copolymerization, and a subsequent step of dissolving or suspending the resulting polymer network in a polydimethylsiloxane-containing solvent.

To initiate the free-radical copolymerization, initiators are used which best correspond to the chosen polymerization process and the resulting polymerization conditions. The most common types of radical initiators include, for example, thermal initiators (azoinitiators, diacyl peroxides and other types of peroxy compounds), UV initiators that generate radicals under UV radiation, or redox initiators that generate radicals based on oxidation-reduction reactions. However, initiation may not be limited to the types of initiators mentioned. Free-radical copolymerization initiators are generally known to those skilled in the art, for example from the textbook G. Odian: Principles of Polymerization, Fouth Edition, John Wiley & Sons, 2004.

An important aspect of the present invention is that all polymer components are covalently bonded to the polymer network structure, thereby preventing their absorption into the body, which could lead to undesired systemic effects. At the same time, when applied to the wound, there is no decrease in the local concentration of the functional anti-inflammatory component by its absorption into the body, thereby significantly extending the time of contact of the functional component with the wound, compared to the low molecular weight components in known wound dressings which are gradually released from the dressing.

Polysiloxanes (silicones) are synthetic polymers that are soluble in liquid, low molecular weight polydimethylsiloxanes. The polysiloxane skeleton consists of a chain in which silicon and oxygen atoms alternate regularly, -Si-O-Si-. This chemical bond is thermally and chemically very stable. The reactivity of siloxanes and polysiloxanes varies depending on the organic substituent on the silicon (alkyl, alkyloxy, hydroxy). While the Si-C bond is chemically stable (alkylsiloxanes), the Si-O-C bond (alkyloxysilanes) undergoes both acidic and basic hydrolysis to form Si-OH groups which subsequently undergo condensation to form stable Si-O-Si bonds (siloxanes).

Siloxane-based monomers which contain a polymerizable double bond in their structure allow to prepare polymeric materials which preferably combine the properties of polysiloxanes and polymers prepared by free-radical polymerization. Furthermore, the presence of a double bond in the siloxane monomer structure enables its copolymerization with other suitable types of monomers that impart additional specific properties to the resulting polymer.

The polymer network which forms the essential part of the liquid wound dressing composition comprises structural units derived from monomers having polymerizable double bonds derived from sterically hindered amines, alkyloxysilanes, and alkylsiloxanes. Along with the free-radical polymerization of double bond monomers, the reaction mixture undergoes hydrolysis of the alkyloxysilane structural units and their subsequent condensation (referred to herein as "condensation" or "hydrolytic condensation"). The result is a unique structure of the polymer network, which is formed by polymer chains formed by free-radical polymerization, which are covalently cross-linked to the siloxane chains resulting from the condensation reactions. The resulting polymer networks retain the solubility/swellability in liquid, low molecular weight polydimethylsiloxanes. By dissolving or suspending the polymer network in said medium, a strongly adherent polymer film is formed upon application to the skin or mucosa and evaporation of the solvent.

The presence of sterically hindered amine-based monomers in the reaction mixture has a dual function. By incorporating monomers containing sterically hindered amines into the polymer network structure, antioxidant properties are introduced into the resulting polymeric material, which contribute to accelerating wound healing. At the same time, basic amino groups of the sterically hindered amines catalyze the hydrolytic reactions of alkyloxy silane monomers and promote the formation of the polymer network. Furthermore, it has been found within the scope of the present invention that the incorporation of the structural units derived from sterically hindered amines, which are inherently hydrophilic monomers, into the polymer network structure does not prevent achieving the desired material properties of the resulting polymer, such as water insolubility and water non-washability from the skin or mucosa - on the contrary, the hydrophilic units enable to adjust these properties to the optimum.

The polymer network swells in the solvents disclosed in the present invention and the formed gel particle suspension forms a low viscosity liquid, similar to a solution, which can be easily applied to the wound. After application to the wound and evaporation of the solvent, the composition forms a film which, due to its properties, contributes to the wound healing during all phases of the healing process. The anti-inflammatory functional component is capable of effectively suppressing inflammatory processes in the wound, while the protective layer of the polymer maintains moisture in the wound, thereby promoting cell adhesion and growth and epithelialization of the wound surface, while providing protection for emerging tissue from mechanical damage. The polymer film is biocompatible, chemically, mechanically and thermally stable, adheres to the skin and mucous membranes, thus easily adapting to the wound base in all contours, thus avoiding the creation of the so-called "dead space" between the skin and the dressing. The polymer film protective layer serves as a barrier against contamination by microorganisms, does not capture dirt and dust, is impermeable to water and permeable for water vapor and oxygen. The film is transparent throughout the healing process, ensuring easy wound observation, including color changes at the wound base.

The liquid wound dressing composition of the invention may be formulated as a solution/suspension by dissolving/swelling the polymer network in a solvent which is volatile, non-irritating and non-stinging upon application to damaged skin or mucosa. The polymer network is preferably present in the solvent in an amount of up to 15 wt. %, preferably up to 10 wt. %, more preferably 1 to 10 wt. %, relative to the total weight of the composition. After application of the liquid composition to the skin or mucosa, a transparent protective film is formed within a short period of time, typically within a few minutes, the film perfectly adapts in shape to the wound surface.

The liquid pharmaceutical composition of the present invention may contain, in addition to the polymer network, pharmaceutically acceptable excipients, based on the final formulation, which may be a solution, suspension, emulsion or gel, depending on the particular application. Such excipients are, for example, stabilizers, emulsifiers or viscosity enhancers, as well as paraffins, vegetable oils, animal fats, synthetic acylglycerols, colloidal silicon dioxide, waxes, polyalkylsiloxanes, colloidal silica fatty oils, starch, cellulose derivatives, carbomers and aluminium-magnesium silicates, gelatin, surfactants, glidants, adsorbents, water, glycerol, activated charcoal; preferably, the pharmaceutical composition is in the form selected from a solution, suspension, emulsion or gel. Types of excipients suitable for the particular dosage forms are well known in the art of pharmaceutical formulation.

The liquid wound dressing composition of the present invention covers the exposed nerve endings after application to the wound, thereby immediately reducing both pain and stinging at the wound site. The wound dressing remains adherent to the surface of the skin or mucosa for up to ten days after application. The wound dressing film peels away with dead skin cells without causing further damage or further skin irritation. In injured skin or mucous membranes, healing is significantly accelerated when the liquid composition of the invention is applied.

The wound dressing composition of the present invention is primarily intended for covering and healing of small ruptures and cracks in the skin, for healing minor burns of the 1st and 2nd degree, cuts and lacerations, for healing of abrasions and blisters, and for preventing their formation, for protective use with traumatizing adhesive tapes and bandages, for the prevention of dermatitis and skin maceration, which is in prolonged contact with aggressive body fluids (for reasons of incontinence, catheterization, introduction of ostomy outlets), or to protect the skin from radiotherapy or UV radiation.

### Brief Description of Drawings

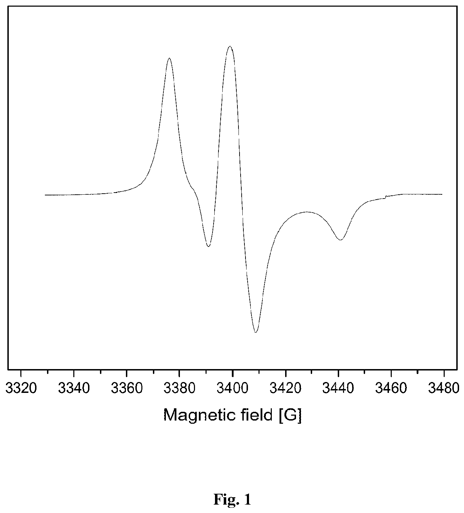

Fig. 1: ESR spectrum of the polymer of Example 4 after reaction with hydrogen peroxide and its decomposition products.

### Examples of carrying out the Invention

### Example 1

A mixture of 36.6 g of 3-[tris(trimethylsiloxy)silyl]propyl methacrylate (structural unit C precursor), 950 mg of 3-(triethoxysilyl)propyl methacrylate (structural unit B precursor), 21.3 g of methyl methacrylate (structural unit D precursor), 177 mg of 2-ethylhexyl acrylate (structural unit D precursor), 3.6 g of N-(2,2,6,6-tetramethylazinan-4-yl) methacrylamide (structural unit A precursor) and 212 mg of 2,2'-azobis(2-methyl-propionitrile) was dissolved in 71 mL of ethyl acetate and 200 µL of water. The polymerization (free-radical polymerization with simultaneus hydrolytic condensation) was carried out for 24 hours at 65 °C. After completion of the reaction, the polymer was precipitated in methanol, isolated and dried to constant weight. The polymer is soluble in HMDS up to a concentration of 10 wt.%. The solution was applied to the skin, where after rapid evaporation of the solvent, it formed a transparent, adhesive film that did not stick from the top and was not washed away by water.

### Example 2

4 g of the polymer of Example 1 were dissolved in 96 g of HMDS. A deep debridement wound located on foot was treated with this solution. After its application, the pain and burning sensation were immediately reduced. The transparent layer that formed over the wound made it easy to check the wound visually without the need for the removal and new application of the wound dressing. After the first application, the wound edges were clearly drawn together. The next day, the newly formed granulation tissue began to grow over the wound, and within five days the wound was completely healed.

### Example 3

1 g of the polymer of Example 1 was dissolved in 64 mL of HMDS. The solution was used to treat minor injuries - cracks of the skin on the heel and around the nails of the hand, 1st degree burns on the neck, cuts on the fingers, an elbow abrasion. After application of the solution, a transparent and flexible protective layer was formed at the affected area, which did not stick to the clothing and was water resistant. Even after the first application of the solution, the healing process is significantly improved.

### Example 4

The polymer of Example 1 was oxidized with hydrogen peroxide according to the following procedure. 4.8 mg of Na₂WO₄.2H₂O in 2 mL of water was dissolved in the vial. 40 mg of the polymer was added to the solution. After addition of 10 mL of 30% H₂O₂ solution, the mixture was allowed to react at room temperature for 72 hours. The polymer was then filtered from the solution, washed thoroughly with water and dried at 50 °C to constant weight. A typical ESR spectrum of the oxidized polymer is shown in Fig. 1 and shows the presence of nitroxide formed by the oxidation of the covalently bonded sterically hindered amine by hydrogen peroxide and products of its decomposition.

### Example 5

A mixture of 38.0 g of 3-[tris(trimethylsiloxy)silyl]propyl methacrylate (structural unit C precursor), 93 mg of 3-(diethoxymethylsilyl)propyl methacrylate (structural unit B precursor), 21.3 g of methyl methacrylate (structural unit D precursor), 2.9 g of 2,2,6,6-tetramethylazinan-4-yl methacrylate (structural unit A precursor) and 185 mg of 2,2'-azobis(2-methylpropionitrile) were dissolved in 61 mL of ethyl acetate and 10 mL of water. The polymerization (free-radical copolymerization with simultaneous hydrolytic condensation) was carried out for 24 hours at 65 °C. After completion of the reaction, the polymer was precipitated in methanol/water, isolated and dried to constant weight (polymer P1). Analogously, polymer P2 was prepared without type A structural units and polymer P3 without type B structural units. While polymers P2 and P3 are sticky and tensile, polymer P1 is a white powder. Upon swelling of the polymer P1 in the ethyl acetate/HMDS mixture, a suspension is formed which is non-stinging upon application and forms a transparent film upon evaporation of the solvent which does not stick.

### Example 6

A mixture of 57.2 g of 3-[tris(triethylsiloxy)silyl]propyl acrylate (structural unit C precursor), 735 µL of trimethoxyvinylsilane (structural unit B precursor), 52.3 g of cyclohexyl acrylate (structural unit D precursor) and 10.8 g of 2,2,6,6-tetramethylazinane-4-yl acrylate (structural unit A precursor) was dissolved in 214 mL of ethyl acetate and 300 µL of water. After the addition of 318 mg of 2,2'-azobis(2-methylpropionitrile), the reaction vessel was purged with nitrogen for 10 minutes and sealed. The polymerization was carried out for 24 hours at 65 °C. Then, the reaction mixture was diluted with HMDS to a final 5 wt. % polymer concentration. After application to the injured skin, the solution is non-stinging, reduces soreness and, after evaporation of the solvents, forms a transparent layer that perfectly adapts to the folds of the skin.

### Example 7

A mixture of 31.3 g of 3-[tris(triethylsiloxy)silyl]propyl acrylate (structural unit C precursor), 812 µL of dimethoxymethylvinylsilane (structural unit B precursor) and 5.6 g of *N*-methyl-2,2,6,6-tetramethylazinane-4-acrylate (structural unit A precursor) was dissolved in 210 mL of ethyl acetate and 280 µL of water. After addition of 175 mg dibenzoyl peroxide, the reaction vessel was purged with nitrogen for 15 minutes and sealed. The polymerization was run for 48 h at 60 °C, then the reaction mixture was evaporated to dryness and the resulting product was dissolved in HMDS to a 3 wt. % polymer concentration. The solution was used to treat a small cut wound on the finger where a transparent protective layer was formed after evaporation of the solvent, which perfectly adhered to the skin and to the wound surface and which was not washed with water.

## Claims

1. A liquid pharmaceutical composition comprising a polydimethylsiloxane-based solvent, and a polymer network comprising
- structural units A derived from sterically hindered amines of the formula (a): 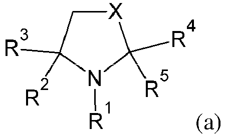 wherein R¹ is -H, -OH, or C₁-C₄ alkyl,
R² to R⁵ are independently selected from C₁ to C₄ alkyl, and
X is -CH(X¹)- or -CH(X¹)CH₂-, wherein X¹ is a free-radical polymerizable chemical group of the formula 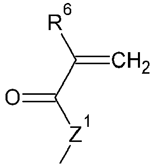 wherein R⁶ is -H or -CH₃ and Z¹ is -O- or -NH-;
- structural units B derived from alkyloxysilanes of the general formula (b): 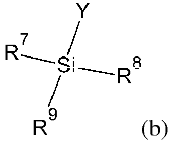 wherein R⁷ is -O(X²), wherein X² is C₁ to C₄ alkyl,
R⁸ and R⁹ are independently selected from C₁ to C₄ alkyl or -O(X³), wherein X³ is C₁ to C₄ alkyl, and
Y is a free-radical polymerizable chemical group of the formula 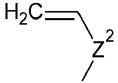 wherein Z² is -(CH₂)ₘ-, wherein m = 0 to 6;
or of the formula 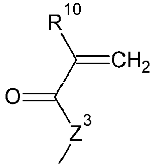 wherein R¹⁰ is -H or -CH₃ and Z³ is -(CH₂)ₙ -, wherein n = 1 to 6;
- structural units C derived from alkylsiloxanes of the formula (c): 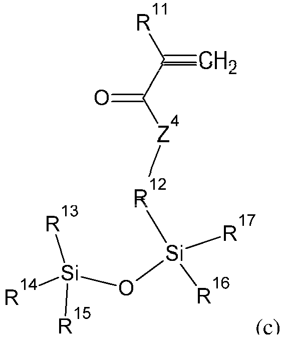 wherein R¹¹ is -H or -CH₃,
Z⁴ is -O- or -NH-,
R¹² is - (CH₂)ₒ -, wherein o = 1 to 6,
R¹³ to R¹⁵ are independently selected from C₁ to C₄ alkyl or -OSi(X⁴)₃, wherein X⁴ is C₁ to C₄ alkyl, wherein X⁴ are the same or different,
R¹⁶ and R¹⁷ are independently selected from C₁ to C₄ alkyl or -OSi(X⁵)₃, and X⁵ is C₁ to C₄ alkyl or -OSi(X⁶)₃ wherein X⁶ is C₁ to C₄ alkyl, wherein X⁵ is the same or different;
- and optionally structural units D derived from monomers selected from the group comprising (meth)acrylamide monomers, alkyl (meth)acrylates, alkyl (meth)acrylamides, alkyloxy terminated (polyoxyethylene) (meth)acrylates, alkyloxy terminated (polyoxyethylene) (meth)acrylamides, *N,N-*dialkylaminoalkyl (meth)acrylates, *N*,*N*-dialkylaminoalkyl (meth)acrylamides, *N*-vinyl-2-pyrrolidone; wherein the alkyls in these substituents are C₁-C₁₄ alkyls, preferably C₁-C₁₂ alkyls or Ci-Cs alkyls.

2. The composition according to claim 1, wherein the content of the structural units A in the polymer network is in the range of 0.01 to 20 wt. %, the content of the structural units B in the polymer network is 0.1 to 15 wt. %, the content of the structural units C in the polymer network is 30 to 80 wt. %, and the content of the structural units D in the polymer network is up to 50 wt. %.

3. The composition according to any one of the preceding claims, wherein the structural units A are derived from 2,2,6,6-tetramethylazinan-4-yl-methacrylate ( 2,2,6,6-tetramethylpiperidine-4-yl-methacrylate) and/or N-(2,2,6,6-tetramethylazinan-4-yl)methacryamide (N-(2,2,6,6-tetramethylpiperidine-4-yl)methacrylamide).

4. The composition according to any one of the preceding claims, wherein the structural units B are derived from 3-(triethoxysilyl) propyl methacrylate, 3-(dimethoxymethylsilyl) propyl methacrylate, (triethoxysilyl)ethylene and/or (trimethoxysilyl)ethylene.

5. The composition according to any one of the preceding claims, wherein the structural units C are derived from 3-[tris(trimethylsiloxy)silyl]propyl methacrylate and/or 3-[tris(trimethylsiloxy)silyl]propyl acrylate.

6. The composition according to any one of the preceding claims, wherein the structural units D are present and are derived from monomers selected from the group comprising methyl methacrylate, methyl acrylate, ethyl methacrylate, ethyl acrylate, isopropyl methacrylate, isopropyl acrylate, *n*-butyl methacrylate, *n*-butyl acrylate, isobutyl methacrylate, isobutyl acrylate, *n*-hexyl methacrylate, *n*-hexyl acrylate, cyclohexyl methacrylate, cyclohexyl acrylate, 2-methyl-1-butyl methacrylate, 2-methyl-1-butyl acrylate, 2-ethylhexyl methacrylate, 2-ethylhexyl acrylate, lauryl methacrylate, lauryl acrylate, isooctyl methacrylate, isooctyl acrylate, and combinations thereof.

7. The composition according to any one of the preceding claims, wherein the polymer network is obtainable by free-radical copolymerization of monomeric precursors of structural units A, B, and C of formulas (a), (b) and (c), respectively; optionally together with monomeric precursors of structural units D; and simultaneous or subsequent condensation reaction.

8. The composition according to any one of the preceding claims, wherein the solvent comprises at least one polydimethylsiloxane having 2 to 10, more preferably 2 to 5, dimethylsiloxane units, which is linear, branched or cyclic; preferably the polydimethylsiloxanes are selected from the group consisting of octamethylcyclotetrasiloxane, decamethylcyclopentasiloxane, octamethyltrisiloxane, hexamethyldisiloxane (HMDS).

9. The composition according to any one of the preceding claims, which is in the form of a solution, a suspension, an emulsion or a gel.

10. The composition according to any one of the preceding claims for use in the prevention of formation of wounds or in wound treatment.

11. A process for the preparation of a pharmaceutical composition according to any one of the preceding claims, comprising the steps of free radical copolymerization of monomeric precursors of structural units A, B and C, and optionally D, and a simultaneous or subsequent condensation reaction, to obtain the polymer network; and the step of subsequently dissolving or suspending the obtained polymer network in a polydimethylsiloxane-based solvent.

12. A polymer comprising
- structural units A derived from sterically hindered amines of the formula (a): 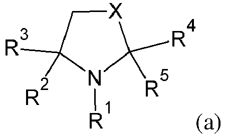 wherein R¹ is -H, -OH, or C₁-C₄ alkyl,
R² to R⁵ are independently selected from C₁ to C₄ alkyl, and
X is -CH(X¹)- or -CH(X¹)CH₂-, wherein X¹ is a free-radical polymerizable chemical group of the formula 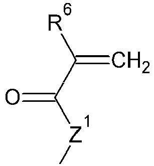 wherein R⁶ is -H or -CH₃ and Z¹ is -O- or -NH-;
- structural units B derived from alkyloxysilanes of the general formula (b): 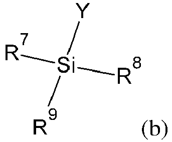 wherein R⁷ is -O(X²), wherein X² is C₁ to C₄ alkyl,
R⁸ and R⁹ are independently selected from C₁ to C₄ alkyl or -O(X³), wherein X³ is C₁ to C₄ alkyl, and
Y is a free-radical polymerizable chemical group of the formula 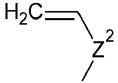 wherein Z² is -(CH₂)ₘ-, wherein m = 0 to 6;
or of the formula 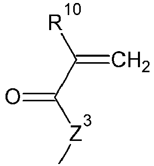 wherein R¹⁰ is -H or -CH₃ and Z³ is -(CH₂)ₙ -, wherein n = 1 to 6;
- structural units C derived from alkylsiloxanes of the formula (c): 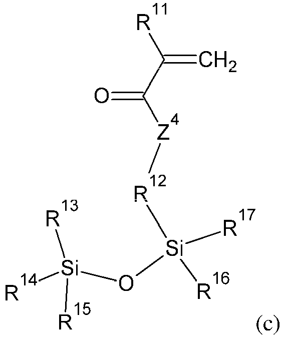 wherein R¹¹ is -H or -CH₃,
Z⁴ is -O- or -NH-,
R¹² is - (CH₂)ₒ -, wherein o = 1 to 6,
R¹³ to R¹⁵ are independently selected from C₁ to C₄ alkyl or -OSi(X⁴)₃, wherein X⁴ is C₁ to C₄ alkyl, wherein X⁴ are the same or different,
R¹⁶ and R¹⁷ are independently selected from C₁ to C₄ alkyl or -OSi(X⁵)₃, and X⁵ is C₁ to C₄ alkyl or -OSi(X⁶)₃ wherein X⁶ is C₁ to C₄ alkyl, wherein X⁵ is the same or different;
- and optionally structural units D derived from monomers selected from the group comprising (meth)acrylamide monomers, alkyl (meth)acrylates, alkyl (meth)acrylamides, alkyloxy terminated (polyoxyethylene) (meth)acrylates, alkyloxy terminated (polyoxyethylene) (meth)acrylamides, *N,N-*dialkylaminoalkyl (meth)acrylates, *N,N*-dialkylaminoalkyl (meth)acrylamides, *N*-vinyl-2-pyrrolidone; wherein the alkyls in these substituents are C₁-C₁₄ alkyls, preferably C₁-C₁₂ alkyls or Ci-Cs alkyls.

13. The polymer according to claim 12, wherein the content of the structural units A in the polymer is in the range of 0.01 to 20 wt. %, the content of the structural units B in the polymer is 0.1 to 15 wt. %, the content of the structural units C in the polymer is 30 to 80 wt. %, and the content of the structural units D in the polymer is up to 50 wt. %.

## Patentansprüche

1. Flüssige pharmazeutische Zusammensetzung, umfassend ein Polydimethylsiloxan-basiertes Lösungsmittel und ein Polymernetzwerk, die Polymernetzwerk umfassend
- Struktureinheiten A abgeleitet von sterisch gehinderten Aminen der Formel (a): 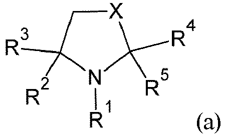 worin R¹ ist -H, -OH, oder C₁-C₄ Alkyl,
R² bis R⁵ unabhängig ausgewählt sind aus C₁ bis C₄ Alkyl, und
X ist -CH(X¹)- oder -CH(X¹)CH₂-, worin X¹ eine frei-radikalisch polymerisierbare chemische Gruppe der Formel 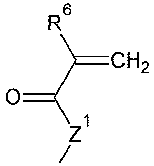 ist, worin R⁶ ist -H oder -CH₃ und Z¹ ist -O- oder -NH-;
- Struktureinheiten B abgeleitet von Alkyloxysilanen der allgemeinen Formel (b): 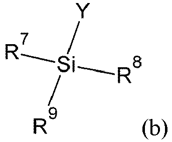 worin R⁷ ist -O(X²), worin X² ist C₁ bis C₄ Alkyl,
R⁸ und R⁹ unabhängig ausgewählt sind aus C₁ bis C₄ Alkyl oder -O(X³), worin X³ ist C₁ bis C₄ Alkyl, und
Y eine frei-radikalisch polymerisierbare chemische Gruppe der Formel 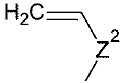 worin Z² ist -(CH₂)ₘ-, worin m = 0 bis 6;
oder der Formel 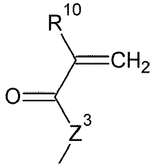 worin R¹⁰ ist -H oder -CH₃ und Z³ ist -(CH₂)ₙ -, worin n = 1 bis 6; ist
- Struktureinheiten C abgeleitet von Alkylsiloxanen der Formel (c): 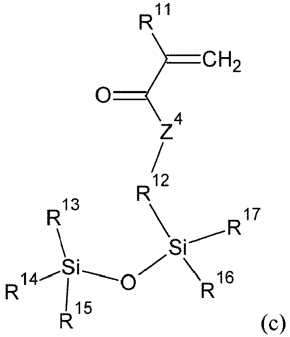 worin R¹¹ ist -H oder -CH₃,
Z⁴ ist -O- oder -NH-,
R¹² ist -(CH₂)ₒ-, worin o = 1 bis 6,
R¹³ bis R¹⁵ unabhängig ausgewählt sind aus C₁ bis C₄ Alkyl oder -OSi(X⁴)₃, worin X⁴ ist C₁ bis C₄ Alkyl, worin X⁴ gleich oder verschieden sind,
R¹⁶ und R¹⁷ unabhängig ausgewählt sind aus C₁ bis C₄ Alkyl oder -OSi(X⁵)₃, und X⁵ ist C₁ bis C₄ Alkyl oder -OSi(X⁶)₃ worin X⁶ ist C₁ bis C₄ Alkyl, worin X⁵ gleich oder verschieden sind;
- und gegebenenfalls Struktureinheiten D abgeleitet von Monomeren ausgewählt aus der Gruppe bestehend aus die Monomeren (Meth)acrylamiden, Alkyl(meth)acrylaten, Alkyl(meth)acrylamiden, Alkyloxy-terminierten (Polyoxyethylen)(meth)acrylaten, Alkyloxy-terminierten (Polyoxyethylen)(meth)acrylamiden, Acrylamiden, *N,N-*Dialkylaminoalkyl(meth)acrylaten, *N,N-*Dialkylaminoalkyl(meth)acrylamiden, *N*-Vinyl-2-pyrrolidon; wobei die Alkyle in diesen Substituenten C₁-C₁₄-Alkyle, vorzugsweise C₁-C₁₂-Alkyle oder C₁-C₈-Alkyle sind.

2. Zusammensetzung nach Anspruch 1, worin der Anteil der Struktureinheiten A im Polymernetzwerk im Bereich von 0,01 bis 20 Gew.-% liegt, der Anteil der Struktureinheiten B im Polymernetzwerk 0,1 bis 15 Gew.-% beträgt, der Anteil der Struktureinheiten C im Polymernetzwerk beträgt 30 bis 80 Gew.-%, und der Anteil der Struktureinheiten D im Polymernetzwerk beträgt bis zu 50 Gew.-%.

3. Zusammensetzung nach einem der vorhergehenden Ansprüche, wobei die Struktureinheiten A von 2,2,6,6-Tetramethylazinan-4-yl-methacrylat (2,2,6,6-Tetramethylpiperidin-4-yl-methakrylat) und/oder *N*-(2,2,6,6-Tetramethylazinan-4-yl)methacrylamid (*N-*(2,2,6,6-Tetramethylpiperidin-4-yl)methacrylamid) abgeleitet sind.

4. Zusammensetzung nach einem der vorhergehenden Ansprüche, wobei die Struktureinheiten B von 3-(Triethoxysilyl)propylmethacrylat, 3-(Dimethoxymethylsilyl)propylmethacrylat, (Triethoxysilyl)ethylen und/oder (Trimethoxysilyl)ethylen abgeleitet sind.

5. Zusammensetzung nach einem der vorhergehenden Ansprüche, wobei die Struktureinheiten C von 3-[Tris(trimethylsiloxy)silyl]propylmethacrylat und/oder 3-[Tris(trimethylsiloxy)silyl]propylacrylat abgeleitet sind.

6. Zusammensetzung nach einem der vorhergehenden Ansprüche, wobei die Struktureinheiten D vorhanden sind und sich von Monomeren ableiten ausgewählt aus der Gruppe umfassend Methylmethacrylat, Methylacrylat, Ethylmethacrylat, Ethylacrylat, Isopropylmethacrylat, Isopropylacrylat, *n*-Butylmethacrylat, *n*-Butylacrylat, Isobutylmethacrylat, Isobutylacrylat, n-Hexylmethacrylat, n-Hexylacrylat, Cyclohexylmethacrylat, Cyclohexylacrylat, 2-Methyl-1-Butylmethacrylat, 2-Methyl-1-Butylacrylat, 2-Ethylhexylmethacrylat, 2-Ethylhexylacrylat, Laurylmethacrylat, Laurylacrylat, Isooctylmethacrylat, Isooctylacrylat und Kombinationen davon.

7. Zusammensetzung nach einem der vorhergehenden Ansprüche, wobei das Polymernetzwerk erhältlich ist durch frei-radikalische Copolymerisation von monomeren Vorstufen der Struktureinheiten A, B und C bzw. der Formeln (a), (b) und (c); gegebenenfalls zusammen mit monomeren Vorstufen der Struktureinheiten D; und gleichzeitige oder nachfolgende Kondensationsreaktion.

8. Zusammensetzung nach einem der vorhergehenden Ansprüche, wobei das Lösungsmittel mindestens ein Polydimethylsiloxan mit 2 bis 10, besonders bevorzugt 2 bis 5, Dimethylsiloxaneinheiten umfasst, das linear, verzweigt oder cyclisch ist; vorzugsweise sind die Polydimethylsiloxane ausgewählt aus der Gruppe bestehend aus Octamethylcyclotetrasiloxan, Decamethylcyclopentasiloxan, Octamethyltrisiloxan, Hexamethyldisiloxan (HMDS).

9. Zusammensetzung nach einem der vorhergehenden Ansprüche, die in Form einer Lösung, einer Suspension, einer Emulsion oder eines Gels vorliegt.

10. Zusammensetzung nach einem der vorangehenden Ansprüche zur Verwendung bei der Verhinderung der Bildung von Wunden oder bei der Wundbehandlung.

11. Verfahren zur Herstellung einer pharmazeutischen Zusammensetzung nach einem der vorhergehenden Ansprüche, umfassend die Schritte der frei-radikalischen Copolymerisation von monomeren Vorstufen der Struktureinheiten A, B und C und gegebenenfalls D, und einer gleichzeitigen oder anschließenden Kondensationsreaktion, um das Polymernetzwerk zu erhalten; und den Schritt des anschließenden Lösens oder Suspendierens des erhaltenen Polymernetzwerks in einem Lösungsmittel auf Polydimethylsiloxanbasis.

12. Ein Polymer umfassend
- Struktureinheiten A abgeleitet von sterisch gehinderten Aminen der Formel (a): 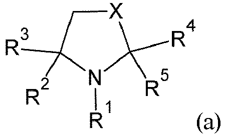 worin R¹ ist -H, -OH, oder C₁-C₄ Alkyl,
R² bis R⁵ unabhängig ausgewählt sind aus C₁ bis C₄ Alkyl, und
X ist -CH(X¹)- oder -CH(X¹)CH₂-, worin X¹ eine frei-radikalisch polymerisierbare chemische Gruppe der Formel 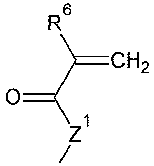 ist, worin R⁶ ist -H oder -CH₃ und Z¹ ist -O- oder -NH-;
- Struktureinheiten B abgeleitet von Alkyloxysilanen der allgemeinen Formel (b): 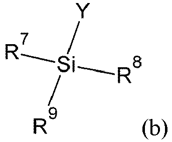 worin R⁷ ist -O(X²), worin X² ist C₁ bis C₄ Alkyl,
R⁸ und R⁹ unabhängig ausgewählt sind aus C₁ bis C₄ Alkyl oder -O(X³), worin X³ ist C₁ bis C₄ Alkyl, und
Y eine frei-radikalisch polymerisierbare chemische Gruppe der Formel 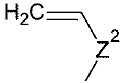 worin Z² ist -(CH₂)ₘ-, worin m = 0 bis 6;
oder der Formel 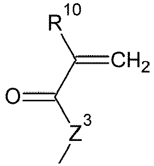 worin R¹⁰ ist -H oder -CH₃ und Z³ ist -(CH₂)ₙ -, worin n = 1 bis 6; ist
- Struktureinheiten C abgeleitet von Alkylsiloxanen der Formel (c): 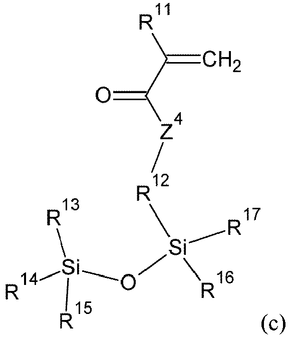 worin R¹¹ ist -H oder -CH₃,
Z⁴ ist -O- oder -NH-,
R¹² ist -(CH₂)ₒ-, worin o = 1 bis 6,
R¹³ bis R¹⁵ unabhängig ausgewählt sind aus C₁ bis C₄ Alkyl oder -OSi(X⁴)₃, worin X⁴ ist C₁ bis C₄ Alkyl, worin X⁴ gleich oder verschieden sind,
R¹⁶ und R¹⁷ unabhängig ausgewählt sind aus C₁ bis C₄ Alkyl oder -OSi(X⁵)₃, und X⁵ ist C₁ bis C₄ Alkyl oder -OSi(X⁶)₃ worin X⁶ ist C₁ bis C₄ Alkyl, worin X⁵ gleich oder verschieden sind;
- und gegebenenfalls Struktureinheiten D abgeleitet von Monomeren ausgewählt aus der Gruppe bestehend aus die Monomeren (Meth)acrylamiden, Alkyl(meth)acrylaten, Alkyl(meth)acrylamiden, Alkyloxy-terminierten (Polyoxyethylen)(meth)acrylaten, Alkyloxy-terminierten (Polyoxyethylen)(meth)acrylamiden, Acrylamiden, *N,N-*Dialkylaminoalkyl(meth)acrylaten*, N,N-*Dialkylaminoalkyl(meth)acrylamiden, *N*-Vinyl-2-pyrrolidon; wobei die Alkyle in diesen Substituenten C₁-C₁₄-Alkyle, vorzugsweise C₁-C₁₂-Alkyle oder C₁-C₈-Alkyle sind.

13. Polymer nach Anspruch 12, worin der Anteil der Struktureinheiten A im Polymer im Bereich von 0,01 bis 20 Gew.-% liegt, der Anteil der Struktureinheiten B im Polymer beträgt 0,1 bis 15 Gew.-%, der Anteil der Struktureinheiten C im Polymer beträgt 30 bis 80 Gew.-%, und der Anteil der Struktureinheiten D im Polymer beträgt bis zu 50 Gew.-%.

## Revendications

1. Composition pharmaceutique liquide comprenant un solvant à base de polydiméthylsiloxane, et un réseau polymère comprenant
- les motifs structuraux A dérivés d'amines stériquement encombrées de formule (a) : 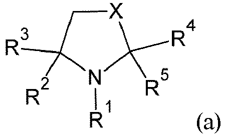 où R¹ est -H, -OH, ou alkyle C₁-C₄,
R² à R⁵ sont choisis indépendamment parmi alkyle C₁ à C₄, et
X est -CH(X¹)- ou -CH(X¹)CH₂-, où X¹ est un groupe chimiquement polymérisable par polymeration à radicaux libres, de formule 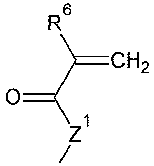 dans laquelle R⁶ est -H ou -CH₃ et Z¹ est -O- ou -NH-;
- les motifs structuraux B dérivés d'alkyloxysilanes de formule générale (b): 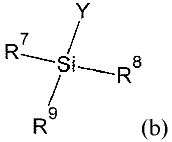 où R⁷ est -O(X²), où X² est alkyle C₁ à C₄,
R⁸ et R⁹ sont choisis indépendamment parmi alkyle C₁ à C₄ ou -O(X³), où X³ est alkyle C₁ à C₄, et
Y est un groupe chimiquement polymérisable par polymeration à radicaux libres, de formule 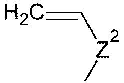 où Z² est -(CH₂)ₘ-, où m = 0 à 6;
ou de formule 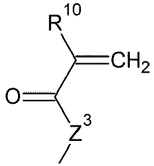 où R¹⁰ est -H ou -CH₃ et Z³ est -(CH₂)ₙ -, où n = 1 à 6;
- les motifs structuraux C dérivés des alkylsiloxanes de formule (c): 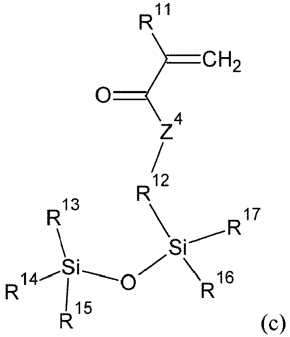 où R¹¹ est -H ou -CH₃,
Z⁴ est -O- ou -NH-,
R¹² est -(CH₂)ₒ-, où o = 1 à 6,
R¹³ à R¹⁵ sont choisis indépendamment parmi alkyle C₁ à C₄ ou -OSi(X⁴)₃, où X⁴ est alkyle C₁ à C₄, où X⁴ sont identiques ou différents,
R¹⁶ et R¹⁷ sont choisis indépendamment parmi alkyle C₁ à C₄ ou -OSi(X⁵)₃, et X⁵ est alkyle C₁ à C₄ ou -OSi(X⁶)₃ où X⁶ est alkyle C₁ à C₄, où X⁵ est identique ou différent;
- et éventuellement des motifs structuraux D issus de monomères choisis dans le groupe comprenant les monomères (méth)acrylamide, les alkyl (méth)acrylates, les alkyl (méth)acrylamides, les (polyoxyéthylène) (méth)acrylates à terminaison alkyloxy, les (polyoxyéthylène) (méth)acrylamides à terminaison alkyloxy les *N,N*-dialkylaminoalkyl (méth)acrylates, les *N*,*N*-dialkylaminoalkyl (méth)acrylamides, la *N*-vinyl-2-pyrrolidone, où les alkyles dans ces substituants sont des alkyles en C₁-C₁₄, de préférence des alkyles en C₁-C₁₂ ou des alkyles en C₁-C₈.

2. Composition selon la revendication 1, où la teneur en motif structuraux A dans le réseau polymère est dans la gamme de 0,01 à 20 % en poids. %, la teneur en motifs structuraux B dans le réseau polymère est de 0,1 à 15 % en poids. %, la teneur en motifs structuraux C dans le réseau polymère est de 30 à 80 % en poids. et la teneur en unités structurelles D dans le réseau polymère est jusqu'à 50 % en poids.

3. Composition selon l'une quelconque des revendications précédentes, où les motifs structuraux A sont dérivés du 2,2,6,6-tétraméthylazinan-4-yl-méthacrylate (2,2,6,6-tétraméthylpipéridine-4-yl-méthacrylate) et/ou N-(2,2,6,6-tétraméthylazinan-4-yl)méthacrylamide (N-(2,2,6,6-tétraméthylpipéridine-4-yl)méthacrylamide).

4. Composition selon l'une quelconque des revendications précédentes, où les motifs structuraux B sont dérivés du méthacrylate de 3-(triéthoxysilyl)propyle, de méthacrylate de 3-(diméthoxyméthylsilyl)propyle, de (triéthoxysilyl)éthylène et/ou de (triméthoxysilyl)éthylène.

5. Composition selon l'une quelconque des revendications précédentes, où les motifs structuraux C sont dérivés du méthacrylate de 3-[tris(triméthylsiloxy)silyl]propyle et/ou de l'acrylate de 3-[tris(triméthylsiloxy)silyl]propyle.

6. Composition selon l'une quelconque des revendications précédentes, où les motifs structuraux D sont présents et sont dérivés de monomères choisis dans le groupe comprenant le méthacrylate de méthyle, l'acrylate de méthyle, le méthacrylate d'éthyle, l'acrylate d'éthyle, le méthacrylate d'isopropyle, l'acrylate d'isopropyle, le méthacrylate de n-butyle, l'acrylate de n-butyle, le méthacrylate d'isobutyle, l'acrylate d'isobutyle, le méthacrylate de n-hexyle, l'acrylate de n-hexyle, le méthacrylate de cyclohexyle, l'acrylate de cyclohexyle, le méthacrylate de 2-méthyl-1-butyle, l'acrylate de 2-méthyl-1-butyle, le méthacrylate de 2-éthylhexyle, l'acrylate de 2-éthylhexyle, le méthacrylate de lauryle, l'acrylate de lauryle, le méthacrylate d'isooctyle, l'acrylate d'isooctyle et leurs combinaisons.

7. Composition selon l'une quelconque des revendications précédentes, où le réseau polymérique est susceptible d'être obtenu par copolymérisation à radicaux libres de précurseurs monomères des motifs structuraux A, B et C de formules (a), (b) et (c), respectivement; éventuellement avec des précurseurs monomères des motifs structuraux D; et par réaction de condensation simultanée ou ultérieure.

8. Composition selon l'une quelconque des revendications précédentes, où le solvant comprend au moins un polydiméthylsiloxane ayant 2 à 10, plus préférentiellement 2 à 5 unités diméthylsiloxane, qui est linéaire, ramifiée ou cycliquee; de préférence les polydiméthylsiloxanes sont choisis dans le groupe constitué par l'octaméthylcyclotétrasiloxane, le décaméthylcyclopentasiloxane, l'octaméthyltrisiloxane, l'hexaméthyldisiloxane (HMDS).

9. Composition selon l'une quelconque des revendications précédentes, se présentant sous la forme d'une solution, d'une suspension, d'une émulsion ou d'un gel.

10. Composition selon l'une quelconque des revendications précédentes pour une utilisation dans la prévention de la formation de plaies ou dans le traitement des plaies.

11. Procédé de préparation d'une composition pharmaceutique selon l'une quelconque des revendications précédentes, comprenant les étapes de copolymérisation à radicaux libres des précurseurs monomériques des motifs structuraux A, B et C, et éventuellement D, et une réaction de condensation simultanée ou ultérieure, pour obtenir le réseau polymère; et l'étape ultérieure de dissolution ou de mise en suspension du réseau polymère obtenu dans un solvant à base de polydiméthylsiloxane.

12. Polymère comprenant
- les motifs structuraux A dérivés d'amines stériquement encombrées de formule (a) : 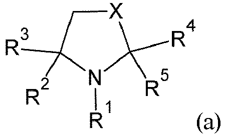 où R¹ est -H, -OH, ou alkyle C₁-C₄,
R² à R⁵ sont choisis indépendamment parmi alkyle C₁ à C₄, et
X est -CH(X¹)- ou -CH(X¹)CH₂-, où X¹ est un groupe chimiquement polymérisable par polymeration à radicaux libres, de formule 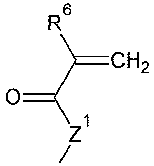 dans laquelle R⁶ est -H ou -CH₃ et Z¹ est -O- ou -NH-;
- les motifs structuraux B dérivés d'alkyloxysilanes de formule générale (b): 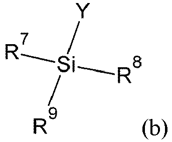 où R⁷ est -O(X²), où X² est alkyle C₁ à C₄,
R⁸ et R⁹ sont choisis indépendamment parmi alkyle C₁ à C₄ ou -O(X³), où X³ est alkyle C₁ à C₄, et
Y est un groupe chimiquement polymérisable par polymeration à radicaux libres, de formule 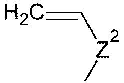 où Z² est -(CH₂)ₘ-, où m = 0 à 6;
ou de formule 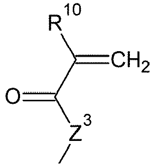 où R¹⁰ est -H ou -CH₃ et Z³ est -(CH₂)ₙ -, où n = 1 à 6;
- les motifs structuraux C dérivés des alkylsiloxanes de formule (c): 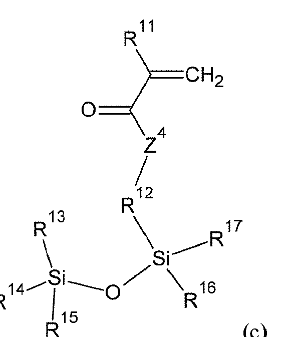 où R¹¹ est -H ou -CH₃,
Z⁴ est -O- ou -NH-,
R¹² est -(CH₂)ₒ-, où o = 1 à 6,
R¹³ à R¹⁵ sont choisis indépendamment parmi alkyle C₁ à C₄ ou -OSi(X⁴)₃, où X⁴ est alkyle C₁ à C₄, où X⁴ sont identiques ou différents,
R¹⁶ et R¹⁷ sont choisis indépendamment parmi alkyle C₁ à C₄ ou -OSi(X⁵)₃, et X⁵ est alkyle C₁ à C₄ ou -OSi(X⁶)₃ où X⁶ est alkyle C₁ à C₄, où X⁵ est identique ou différent;
- et éventuellement des motifs structuraux D issus de monomères choisis dans le groupe comprenant les monomères (méth)acrylamide, les alkyl (méth)acrylates, les alkyl (méth)acrylamides, les (polyoxyéthylène) (méth)acrylates à terminaison alkyloxy, les (polyoxyéthylène) (méth)acrylamides à terminaison alkyloxy les *N,N*-dialkylaminoalkyl (méth)acrylates, les *N,N*-dialkylaminoalkyl (méth)acrylamides, la *N*-vinyl-2-pyrrolidone, où les alkyles dans ces substituants sont des alkyles en C₁-C₁₄, de préférence des alkyles en C₁-C₁₂ ou des alkyles en C₁-C₈.

13. Polymère selon la revendication 12, où la teneur des motifs structuraux A dans le polymère est dans la gamme de 0,01 à 20 % en poids. la teneur en motifs structuraux B dans le polymère est de 0,1 à 15 % en poids. la teneur en motifs structuraux C dans le polymère est de 30 à 80 % en poids, et la teneur en unités structurelles D dans le polymère va jusqu'à 50 % en poids.
